# EUROPEAN PATENT APPLICATION

(11) **EP 1 894 823 A1**
(43) Date of publication of application: **05.03.2008**
(21) Application number: 06755359.4
(22) Date of filing: 23.05.2006
(51) Int. Cl.: B62D 65/12, B60B 29/00, B23P 19/00, B23P 19/06

(54) **MACHINE FOR FIXING WHEELS ON VEHICLES**

(30) Priority: 06.06.2005 ES 200501352
(71) Applicant: Eurobarna de Caldereira S.L., 08338 Premia de Dalt (Barcelona) (ES)
(72) Inventor: LAFFITTE FIGUERAS, Marti, E-08110 MONTCADA I REIXACA (BARCELONA) (ES)
(74) Representative: Ungria Lopez, Javier
(86) International application number: PCT/ES2006/000273
(87) International publication number: WO 2006/131577

(57) **Abstract**

Machine intended to hold the wheels of vehicles.

It enables mounting and holding the wheels on vehicles that travel on the conveyor of the assembly line in a completely automated manner, without the intervention of human operators.

It has a wheel supply bed (1) equipped with a positioning element (23) that centers the wheel and lifts it to be taken by a supporting arm (2) that moves it to a rotating plate (3) associated to a screw feeding device (4) that inserts them on the rim aided by an optical detector. The supporting arm (6) of a mobile bed (5) contiguous to the first element bears a multiple screw driver (7) that positions itself on the screws and tilts the whole set 90° to present the wheel in front of the vehicle's hub to be able to finally insert the wheel.

## Description

### OBJECT OF THE INVENTION

The present invention, according to its title, refers to a machine intended to affix wheels to vehicles, and which object is to attain, in a completely automated manner, the assembly of the wheel set (rim and tire set) on the discs or wheel hubs of vehicles as they travel through an assembly line without the intervention of human operators.

The invention is specifically suited to assemble automobile wheels, although it can also be applied to other types of vehicles once the appropriate modifications have been incorporated to the invention.

### BACKGROUND OF THE INVENTION

Current vehicle assembly lines do not possess an automated system to place, affix and assemble vehicle wheels in the manner proposed by the present invention.

The current system is semi-automated, since both human and mechanical operators are involved. The wheel is affixed to the vehicle in two stages, a first stage during which the wheel is presented over the vehicle wheel disc or hub, which is the element that normally contains the threaded orifices through with the wheel affixing screws are inserted. To complete this operation, the human operator uses a trolley to transport and set the wheel in place.

The second stage of assembly involves tightening the screws so the wheel is securely affixed to the vehicle. For this operation the human operator uses the multiple screwdriver, a tool that in one sole operation secures all the wheel screws at the same time, avoiding having to tighten them one by one.

Therefore, the wheel affixing process involves two stages: presentation and affixing, and they are both implemented by a human operator.

The machine object of the present invention eliminates the need for a human operator in both stages of the assembly process involving affixing a wheel to a motor vehicle in an assembly line.

### DESCRIPTION OF THE INVENTION

Generally speaking, the machine for affixing wheel sets to motor vehicles that is the object of the invention is constituted by a wheel supply bed, that can be either automatic or manual, since it will be manned by a human operator.

Once the wheel to be mounted on the vehicle is placed on the supply bed, it is received by a positioning element that emerges from the lower surface o said wheel supply bed, and it is placed in a centered position in relation to an upper supporting arm that grips the wheel efficaciously. This gripping action can also be achieved by a clamp type element, or also through a pneumatic element having a suction cup effect, that approaches the tire to create a vacuum field.

Once the wheel is held, the supporting arm raises while moving horizontally to set the wheel on a rotating plate located in the final section of said wheel-supply bed. In this section or work station, there is a screw feeding device that supplies the screws that will be pre-mounted on the tire's orifices. At this location, the supporting arm is lowered and the vacuum field that was holding the wheel is eliminated, allowing the wheel to be placed on the rotating plate that can also be made to move linearly to convey the wheel to another mobile rack or bed that travels parallel to the assembly line, at the same speed that the vehicle onto which the wheels will be mounted, and then backing up to start a new cycle.

The reason this second plate is a rotating plate is to enable it to face the rim's orifices once the screw-feeding mechanisms lowers them. This operation is done through an optical detector. Another function of this optical detector when orienting the rim in place is that once all the orifices have been occupied by the respective screws, it sets the rim in a position that allows the multiple screwdriver to grip all of them simultaneously as it will be explained later.

The mobile bed also has another supporting arm that receives the wheel from the fixed bed, adopting a raised horizontal position that first allows it to access the wheel and then move back on empty. This arm incorporates the multiple screwdriver, that is embodied by as many screw-driving elements as screws are present in the wheel. The arm rotates 90° to adopt a vertical position, moment at which it lowers down to hold the wheel, already perfectly positioned and centered by the appropriate centering mechanism located in this mobile bench. In this arrangement, this last supporting arm having the screwdriving device attached to it, raises up traveling backwards through the same run it had traveled in the opposite direction before and then rotates 90° to recover its horizontal position, approaching then in a linear path to bring the respective pre-mounted screws on the wheel to the threaded orifices made in the vehicle's disk or hub. The wheel, once the screwdriver secures the screws will be perfectly mounted to the vehicle, in an operation that, as it has been noted earlier, occurs while the mobile bench travels parallel and at the same speed that the vehicle on the assembly line.

There will be two of such machines at the assembly line, one at each side of it to be able to simultaneously mount all the wheels of the vehicle.

It should also be noted that the suspension mechanisms of the vehicles that are conveyed on the assembly lines give out, adopting a convergent position, because the vehicles do not have wheels while being conveyed on the assembly lines, and this causes the wheel shafts to be without support, and the suspension mechanisms have to bear the weight of the components themselves, the steering mechanism, brakes, brake discs, etc. and the disk or hub containing the orifices to house the screws that will serve to affix the wheel lose verticality. It should also be noted that there is an alternative to the discs having the threaded orifices to insert the screws to affix the wheel, and that is that the disk or hub can carry the threaded stay bolt and the wheel can be secured when the appropriate affixing nuts are threaded, as it is also the custom. The machine in question can perfectly carry out this type of double assembly with a slight modification. Another factor to consider is that the steering mechanism is not accurately aligned sand said disks may be oriented to one or the other sides. These two factors are serious disadvantages when mounting the wheel to the vehicle, since to appropriately assemble the disks where the wheel screws will be housed the elements have to be perfectly faced by the wheel supporting arm so the screws pre-mounted in the wheel can later move towards the disk's threaded orifices and be screwed in the correct manner by the multiple screwdriver device.

This device includes two mobile elements that move in two perpendicular directions, one of them moves with an ascending/descending vertical movement that will serve to raise the suspension mechanism, and the other moves horizontally and will serve to align the steering mechanism when the disks, that is naturally free, is laterally pressed.

Another factor to consider is that the wheel held by the supporting arm adopts a specific position that will correspond to that of the screwdriving heads of the multiple screwdriver, whiled the disk or hub of the vehicle where the wheel will be mounted will come on the assembly conveyor with the orifices positioned in a random manner, and therefore not aligned with the screws that are mounted in the wheel.

To overcome this disadvantage there is a head that makes the vehicle disk rotate in such a manner that the wheel's screws are correctly positioned to face the orifices.

Another function of this machine is to detect whether there is any anomaly when securing the screws to the vehicle. In this manner, if any of the screws was not properly affixed to the vehicle the remaining screws in the same wheel would be unscrewed and the wheel returned by the supporting arm to the point of the mobile bench that incorporates a tilted roller table which function is to evacuate the wheel.

Taking into account all of the above, the most essential functional characteristics of the machine are the following:
■ Securing the wheels by a vacuum mechanism achieved by eliminating the intervening air, or suction cup effect.
■ Positioning/centering of the wheels in relation to the supporting arm that is immediately above them by means of a positioning element.
■ Positioning the rim's orifices of the wheel to be mounted that will receive the affixing screws by means of an optical detector attached to the positioning element in the screw feeding area.
■ Positioning of the vehicle's disk orifices in the same arrangement as the screws of the tire belonging to the wheel to be mounted.
■ Centering of the steering and suspension mechanisms of the vehicle.

The machine object of the invention, although preferably intended for assembling the wheels of motor vehicles, can also be used to assemble wheels in any other type of vehicle.

The machine's working sequence can be summarized as follows:

Once the wheel has been placed on the rotating plate, the positioning element is raised to locate the central orifice of the rim, when the latter is correctly positioned and centered. Next, the optic detector enables the rotating plate to rotate the wheel until the laser beam no longer detects any surface, which means it has encountered one of the orifices made in the rim to receive the corresponding screw. The next step is the orifice receiving the screw by means of a screw supplying device located in the upper part of the arm. This device will be configured by two shafts, the first receives the screw by means of a tube connected to a container that holds the screws, traveling horizontally until it places the screw on the lower part of the second - vertical- shaft, that picks up the screw and moves downwards until it places the screw in one of the orifices of the tire. The centering operation mediated by the optical detector and the action of both shafts described immediately above is repeated until all orifices in the tire have been filled with the corresponding screws. A possibility exists to feed the screws in pairs rather than individually as described.

While the screws have been positioned in the tire, the supporting arm has received a new wheel and has positioned it correctly on the wheel-supply bench by means of its positioning element.

The next operation in this machine sequence is the lowering of the supporting arms, that move downwards to grip the wheels as previously described, and once they have gripped them they raise again, moving horizontally to position the following: the initial supporting arm places the wheel on the rotating plate while the other supporting arm grips the wheel and carries it with the screws mounted on the tire on the mobile bed. Once both wheels have been placed in their new locations both arms recover their initial position to initiate a new work cycle.

It should be noted that the machine is then divided in two independent sectors. The first is fixed and corresponds to the part of the machine that contains the supply bed and the supporting arms. The second sector, that contains the mobile bed, also has a supporting arm for the screwdriver and other elements. The reason this part of the machine is mobile is because once the first wheel of the vehicle has been gripped, this part of the machine travels to the other end of the vehicle to mount the second wheel of the same side of the vehicle. While the machine is traveling, the supporting arm picks up the wheel ready at the wheel-supply bed, and therefore, the vehicle in the assembly line will move in between to of said machines that will each mount the wheels of the respective sides of the vehicle.

Before the arm positions the wheel on the vehicle, other elements intervene to perfectly orient the disks or hubs of the vehicle. The next element to intervene is the head which function is to position the disk's elements in such a manner that they face the wheel screws, as previously described, and to do this, said head, after the direction and perpendicularity of the components of the wheel have been duly corrected, effects an upward movement until it faces the vehicle's disk. Then it approaches it until the lugs of the head contact the disk and are then hidden inside the head, since they are equipped with springs. Next, this head rotates until the lugs locate the disk orifices of the vehicle and penetrates them, and thus located the head continues rotating until it takes them to the position where said orifices will be perfectly facing the screws pre-mounted on the wheel and held by the multiple screwdriver.

The attached drawings have been included to facilitate the understanding of the characteristics of the invention. These drawings, that are commented in the next section, are an integrating part of the descriptive report and its figures are intended as illustration and not as a limitation of the present invention.

### BRIEF DESCRIPTION OF THE DRAWINGS

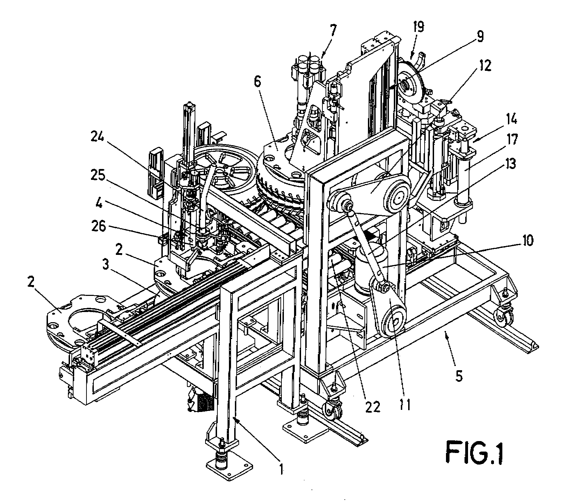

Figure 1. Is a perspective view of the machine object of the invention which function is to hold the wheels of motor vehicles.
Figure 2. Is another perspective view of the same machine seen from a different side.

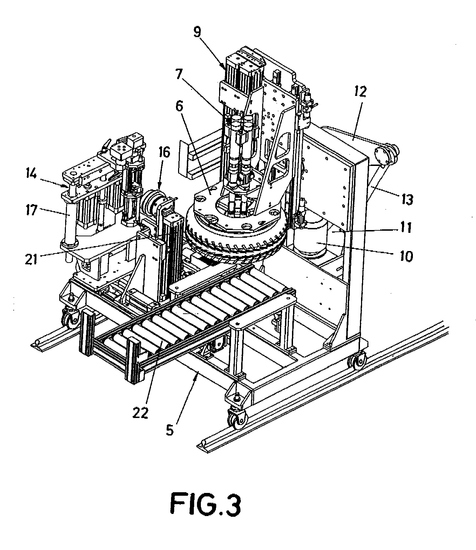

Figure 3. Is a perspective view of the mobile bed and its associated elements.

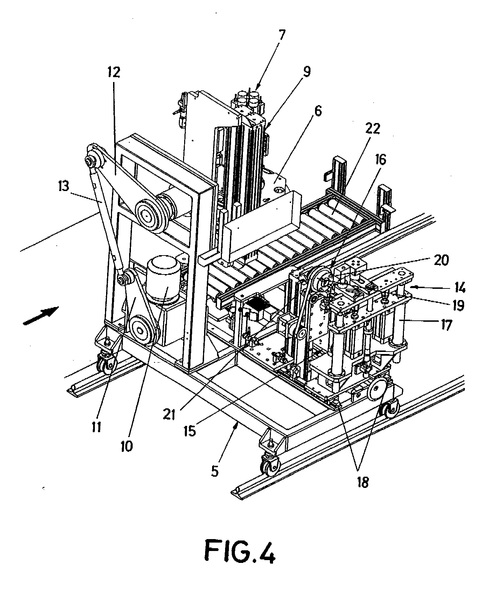

Figure 4. Is another perspective view of that shown in figure 3, from a different point of view.

### DESCRIPTION OF THE PREFERRED EMBODIMENT

In reference to the numbered figures listed above, we can see how the machine which function is to hold the wheels of motor vehicles object of the present invention, offers a bed 1 secured to the floor near the assembly line that conveys the vehicles on which the wheels will be mounted in this automated manner. Bed 1 receives the wheel on a positioning centering element that delivers it by means of the supporting arm 2 that can travel vertically and horizontally. This arm bears one or several gripping elements that are applied against the tire with a suction cup effect to hold it perfectly.

Then, the supporting arm 2 travels horizontally to set the wheel on the rotating plate 3 located below the screw-supply device 4.

The rotating plate 3 includes another wheel positioning element that operates by means of an optical detector to make plate 3 rotate and stop at an angular position on which the rim's orifices may receive sequentially, one by one, or in pairs, the screws that the screw-supply device 4 delivers from the correct vertical position.

There is another supporting arm 2 at this work station of the assembly line that takes the wheel with the screws already in and moves it over the next bed, that is a mobile bed, and that will accompany the vehicle until the wheel has been completely secure.

Number 6 refers to the supporting arm of mobile bed 5 that takes the wheel and has the capacity to tilt 90° to present the wheel in front of the hub of the vehicle that is being conveyed by the assembly line.

The multiple screwdriver 7 is set on the supporting arm 6, that includes as many single screwdrivers as screws are in the wheel. When the supporting arm 6 takes the wheel with the screws already on, it raises vertically through guides 8 and spindle-nut type actuating systems 9. It then rotates 90° by means of motor 10 and the connecting rod system 11 and 12 and stay 13, moving finally towards the vehicle's hub to assemble the wheel.

The vehicle's hub, before the wheel is assembled, has already been positioned in the correct position to receive the screws from the rim facing its threaded orifices. This positioning is achieved by means of the three devices that can be clearly seen in the figures with numbers 14, 15 and 16. The first, or device 14, lifts the suspension so the hub can be set in a vertical position (it can be lifted and lowered by means of the guide cylinders 17). The second device or device 15, orients the hub aligning the steering mechanism and positions it parallel to the rim (moving forwards and backwards horizontally sliding on guides 18). The third device, or device 16, is a head that makes the disk or hub rotate so its orifices can be positioned facing the screws already installed on the wheels, and to this effect, plate 19 has been included. Plate 19 is equipped with retractile lugs 20 that enter the hub's orifices once said head has been positioned at the right height by lift 21 and then starts rotating until it finds said orifices, introducing itself in them elastically and completing then the rotation movement until they face the wheel's screws. Then, plate 19 withdraws to allow the wheel to move forward. The operation is completed after the multiple screwdriver has acted.

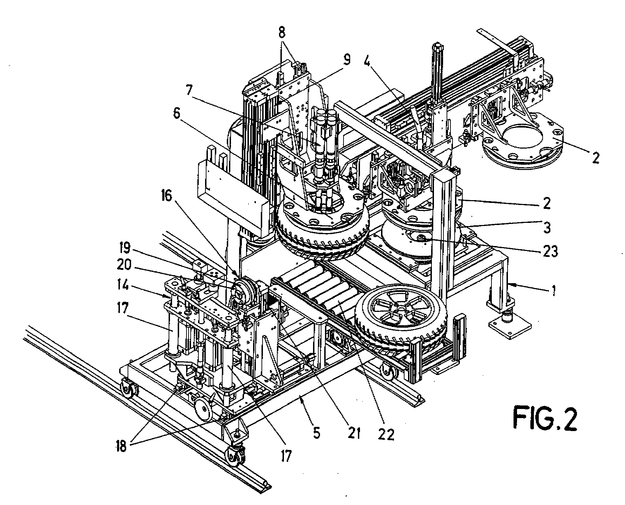

If the screwdriver encounters any anomaly when screwing these screws on the hub or disk of the vehicle, all the previously installed screws are unscrewed and the wheel is returned by the supporting arm 6 to the ramp or roller table 22 (see figure 2).

Figure 2 shows the rotating plate 3 on fixed bed 1 and how the central element 23 of the wheel deposited by the supporting arm 2 may emerge from its inner casting.

On the other hand, it can be observed that the screw supply device 4 (the screws shown in this case) that inserts them in the wheel rim's orifices, includes the vertical tubular shaft 24 through which the screws are delivered in the correct position from the screw container that is not shown in the figure. The deviator 25 transports it under the pushing shaft 26 that inserts it. Plate 3, then rotates to allow the wheel to offer another orifice to receive a new screw and so on until all four orifices have been completed (shown in this case).

## Claims

1. **VEHICLE WHEEL HOLDING MACHINE,** operation that is carried out in an automated manner at the assembly line, **characterized in that** it is constituted by a wheel feeding bench (1), where they are received by a positioning element (23) that centers the wheel and raises it to be taken by an upper supporting arm (2) that holds it pneumatically by means of the suction cup effect and transports it on a rotating plate (3) located at the end of said fixed bed, and having equipped said rotating plate (3) with a screw or nut feeder device (4) to hold the wheel to the hub of the vehicle, and an optical detector of an element that will position the orifices or the stay bolts of the rim in relation to the screws or nuts respectively, of the screw or nut feeder device (4) and also in relation to the multiple screwdriver (7) that is mounted on the supporting arm (6) of a contiguous bed (5), this supporting arm (6) receiving the wheel already bearing the screws or nuts and with the capacity to tilt 90° to position or present the wheel in front of the hub or disk of the vehicle that is being conveyed by the assembly line and that it contains said orifices or stay bolts.

2. **VEHICLE WHEEL HOLDING MACHINE,** according to claim 1 **characterized in that** the second bed (5) is mobile and accompanies the vehicle as it travels forward on the conveyor and backs up to receive the new wheel and insert it in the remaining hub on the same side of the same vehicle, or in the hub of the next vehicle that is conveyed on the assembly line.

3. **VEHICLE WHEEL HOLDING MACHINE,** according to claim 1 **characterized in that** the disk or hub of the vehicle's axis is vertically arranged angulated at "0" degrees by means of a head having two axis: a vertical one (14) that can move up and down to lift the suspension mechanism and a horizontal one (15) that aligns the steering mechanism.

4. **VEHICLE WHEEL HOLDING MACHINE,** according to claim 1 **characterized in that** it design includes a head (16) associated to the mobile bed (5) and capable of traveling upwards and downwards and bearing positioning means that advance transversally and can rotate the hub or disk of the vehicle in reference to the position of the wheel to be mounted.

5. **VEHICLE WHEEL HOLDING MACHINE,** according to claim 1 **characterized in that** said positioning means are determined by retractile lugs (20) that emerge from a plate (19) and which distribution is identical to that of the orifices of the wheel hub or disk, and the plate (19) gets closer to the hub and rotates to face it and then drag it until it is placed in the correct angular position.

6. **VEHICLE WHEEL HOLDING MACHINE,** according to claim 1 **characterized in that** it is equipped with a detector that detects any anomaly in the tightening of the screws or nuts that secure the wheel, and if that is the case it unthreads those already tightened by screwdriver (7) and the affected wheel is rejected by the supporting arm (6) that takes it to a tilted roller ramp to dispose of it.

7. **VEHICLE WHEEL HOLDING MACHINE,** according to claim 1 **characterized in that** the centering element (23) is embodied by a vertical cylinder which stem ends in a flared shape that adjusts to that of the central casting of the rim and has an external flange to support said rim.

8. **VEHICLE WHEEL HOLDING MACHINE,** according to claim 1 **characterized in that** the screw or nut feeder device (4) that locates the screws or nuts in the orifices or stay bolts respectively of the rim, is configured by two shafts, a vertical tubular shaft (24) that receives the screw in the correct position from a screw container, and travels laterally by means of a deviator (25) until it occupies the position of the second shaft (26), that is also vertical and tubular and that moves downwards to insert it in the corresponding orifice of the rim, and then rotates the wheel until all the screws are presented.

9. **VEHICLE WHEEL HOLDING MACHINE,** according to claim 1 **characterized in that** the multiple screwdriver (7) incorporates as many single screwdrivers as screws are needed by the wheel, traveling vertically and downwards to receive them, and maintaining this position during the 90° rotation of the supporting arm, and while it travels horizontally to insert the wheel on the hub or disk of the vehicle and effects the tightening maneuver.
